# EUROPEAN PATENT APPLICATION

(11) **EP 4 723 432 A1**
(43) Date of publication of application: **08.04.2026**
(21) Application number: 24204148.1
(22) Date of filing: 02.10.2024
(51) Int. Cl.: H02J 50/40, H02J 50/00, H04W 4/70, H04W 52/02, H02J 50/50, H02J 50/80

(54) **INTERNET OF THINGS DEVICE AND NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); KUANG, Quan, 63225 Langen (DE); DHANANJAYA, Harshith, 63225 Langen (DE)
(74) Representative: Grünecker Patent- und Rechtsanwälte PartG mbB

(57) **Abstract**

The present disclosure relates to an Internet of Thing, loT, device, comprising the following. A transceiver, which in operation, receives, from a node, a message for a communication process, and a circuitry, which in operation, determines based on an indication of the loT device power shortage to harvest energy for the communication process.

## Description

### BACKGROUND

### 1. Technical field

The present disclosure relates to an loT device and its communication with a node, for example, a base station or an intermediate node connected to a base station.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states.

### SUMMARY

One non-limiting and exemplary embodiment facilitates an Internet of Things, loT, device communicating with a node.

In an embodiment, the techniques disclosed herein feature: An Internet of Things, loT, device, comprising a comprising a transceiver, which in operation, receives, from a node, a message for a communication process, and a circuitry, which in operation, determines based on an indication of the loT device power shortage to harvest energy for the communication process. The loT device power shortage is a power shortage of the loT device. In another embodiment, the techniques disclosed herein feature: A method comprising the following steps performed by an Internet of Things, loT, device:
receiving, from a node, a message for a communication process, and
determining, based on an indication of the loT device power shortage, to harvest energy for the communication process.

In another embodiment, the techniques disclosed herein feature: A node comprising: a transceiver which, in operation, sends, to an Internet of Things, loT, device, a message for a communication process, and a circuitry, which in operation, determines based on an indication of the loT device power shortage that the loT device harvests energy for the communication process.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a topology for an A-loT device;
- **Fig. 3**: illustrates another topology for an A-loT device;
- **Fig. 4**: illustrates a signaling diagram, wherein an loT device successfully completes a communication process;
- **Fig. 5**: illustrates a signaling diagram, wherein an loT device fails to successfully complete a communication process;
- **Figs. 6, 8, 9, and 11 to 13**: illustrate signaling diagrams, wherein the loT device reacts on a power shortage according to an exemplary embodiment of the present disclosure;
- **Fig. 7**: illustrates a schematic diagram of loT device states;
- **Fig. 10**: illustrates a schematic diagram of using resources, wherein the loT device reacts on a power shortage;
- **Fig. 14**: illustrates a flow diagram for an loT device to react on a power shortage;
- **Fig. 15**: illustrates a flow diagram for a node to react on a power shortage;
- **Fig. 16**: illustrates a general, simplified and exemplary block diagram of an loT device and a node;
- **Fig. 17**: illustrates functional structure of the circuitries pertaining to the loT device and the node;
- **Fig. 18**: illustrates a flow diagram for the loT device according to an exemplary embodiment of the present disclosure;
- **Fig. 19**: illustrates a flow diagram for the node according to an exemplary embodiment of the present disclosure;
- **Fig. 20**: is a signaling diagram illustrating an exemplary exchange between an A-loT device and a node according to an exemplary embodiment of the present disclosure; and
- **Fig. 21**: shows exemplary functional split options in 5G O-RAN.

### DETAILED DESCRIPTION

### 5G NR system architecture and protocol stacks

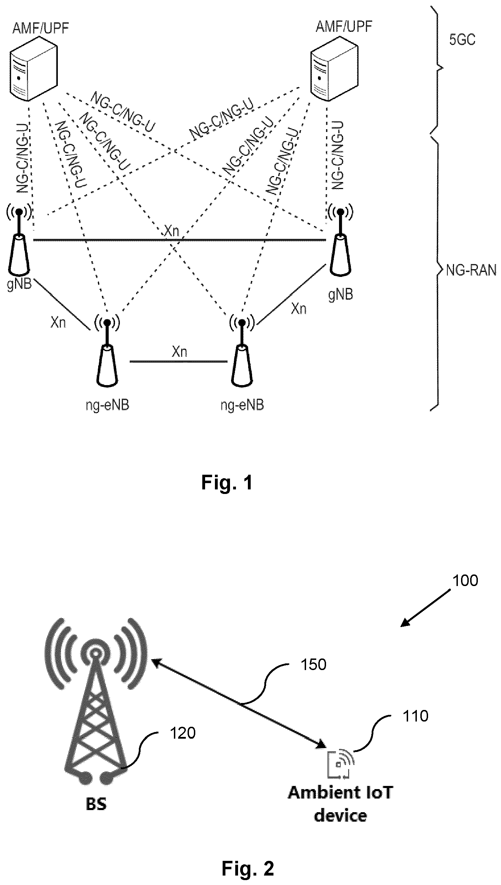

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device, in the following also referred to as loT device, may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Topologies

Particularly, two different topologies are exemplarily considered in this disclosure. In a first topology 100 as illustrated in **Fig. 2****,** an A-loT device 110 directly and bidirectionally communicates with a base station 120 over a wireless channel 150. In general, theA-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

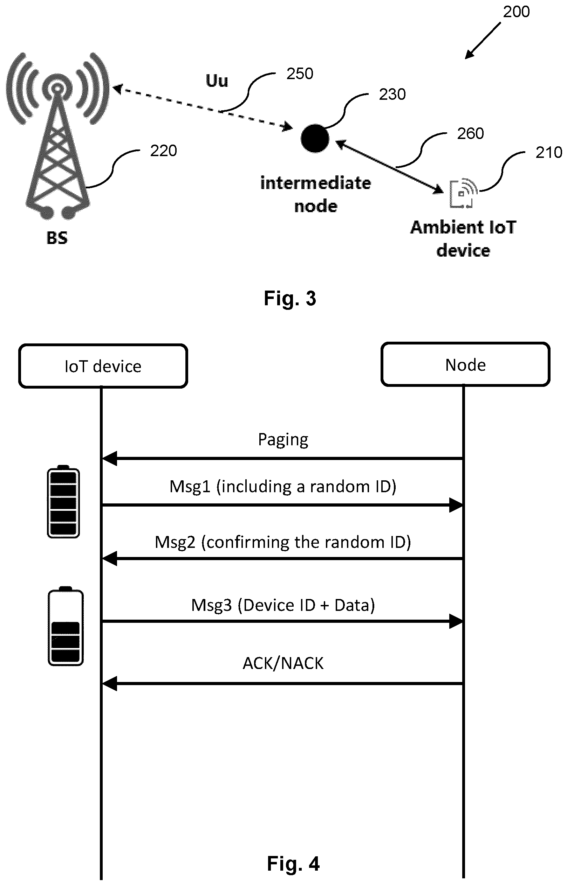

In a second topology as illustrated in **Fig. 3****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 3****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Further improvements

An loT device, for example the A-loT device 110 may have a limited power storage, and harvest energy capability. In particular, the A-loT device may use a capacitor instead of a battery to store energy, which has a lower power storage capacity. With a limited storage capacity, the energy level could vary frequently which affects the communication ability.

For instance, as shown in **Fig. 4****,** an A-loT device may receive a paging or triggering signal to initiate a communication process such as the Random Access Channel (RACH) procedure and send and/or receive data during the communication process. The communication process may require a plurality of messages and responses to be successful. In more detail, the node initiates the device paging. The loT device identifies the paging and sends a response message (Msg 1) including a random ID. The node sends a Msg2 to the loT device. The loT device can then send Msg 3 to the node. The node can optionally send an ACK/NACK in response to the data transmission. Energy is consumed during the process and the energy storage may be depleted during the communication process.

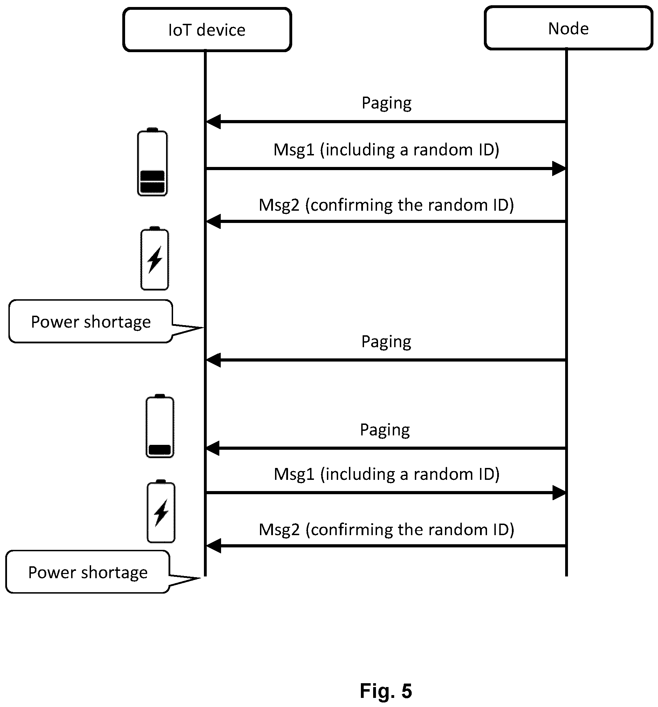

For example, as shown in **Fig. 5****,** the device may initiate the process but cannot finish it due to the power shortage after receiving Msg2. In more detail, the node initiates the device paging, and the loT device sends a response message (Msg1) in response. The node sends a confirmation and waits for a response from the loT device. However, the loT device cannot send a response (e.g., Msg 3) because it lacks power. The node may send multiple paging signals to the loT device, assuming that the loT device did not successfully receive the previous messages. The node may be unaware of the device's lack of power and perform the paging and/or triggering multiple times without giving the loT device enough time to harvest power.

In a similar situation, the loT device may initiate data transmission/reception when it has a limited amount of power. If the amount of data is large, the device may run out of energy without completing the transmission/reception. In fact, performing the data transmission/reception may consume the energy and result in a longer time to recover the energy.

The problem is that the loT device may not be able to successfully complete a communication process due to a lack of power. The node can exacerbate this problem by not being aware of the loT device's lack of power.

The technical problem to be solved is to reduce the power consumption, to enable other devices to be aware that the loT device's lack of power, to avoid incomplete communication processes and to increase the possibilities of energy harvesting by the loT device.

The inventors have therefore identified the possibility of providing improved transmission methods to avoid one or more of the disadvantages described above. The present invention relates to various solutions and variants for such improved transmission methods.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile **station** or **mobile node** or **user terminal** or **user equipment (UE)** or I**oT device** or A-**IoT device** is a **physical entity** (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** or **"node"** or **"reader"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc. (see above background discussion).

As used herein, the term **"message"** specifically refers to a formatted and standardized unit of data transmission that carries encapsulated information, including trigger signals (also referred to herein as triggering signals), paging signals, and data signals between devices or systems within a network. In the context of loT or communication systems, a message can refer to a trigger signal, for example to initiate a specific action or process, a paging signal, for example to locate or notify an loT device when there is an incoming communication, such as a data packet, and/or a data signal that carries the actual information or data payload. The network can send a message when it needs to notify the loT device of an incoming event. Trigger and paging signals within the packet can prompt a response or action at the receiving end, such as triggering a specific process, such as a RACH process, initiating data transmission, or triggering a sensor connected to the loT device. The data signal may contain the data or information to be communicated, such as commands, status updates, or other relevant information. In addition, the message may contain control information such as identification numbers, source and destination addresses, sequence numbers, error detection codes, and other metadata. This control information helps ensure that the message is routed and processed correctly and that data integrity is maintained during transmission.

As used herein, the term **"response"** refers to a reply or reaction provided by a receiving device or system, e.g. the loT device, in response to a received message, such as a trigger signal, a paging signal, or a data signal. It represents the acknowledgement or response sent back to the sender, e.g. the node, to indicate the outcome of the received message. Responses are used to acknowledge receipt, provide requested information, or indicate the success or failure of an operation.

As used herein, the term **"communication process"** refers to the systematic sequence of steps that enables the transmission of information from one point to another point. This process facilitates effective communication between devices, networks, or systems. The communication process can involve at least one of encoding, transmitting, receiving, and decoding messages across networks, enabling the transfer of data or information between devices or systems. The communication process comprises for example the RACH procedure, and other processes for establishing, maintaining, and managing communication between loT devices and nodes.

As used herein, the term **power shortage** also referred to as a power outage, energy shortage, or power crisis, which occurs when the demand for electrical power exceeds the available supply, leading to a temporary or prolonged inability to meet the electricity needs of the loT device. For example, in view of a power shortage, the above-described communication process can be unsuccessful in view of an loT device that can, for example, not execute communication steps related to the communication process such as sending a response for finalizing the communication process. A power shortage can be determined by an loT-device, e.g. by measurements, or can be determined based on an indication, e.g. a number of previous failed communication processes.

As used herein **energy harvesting** is the process of capturing and converting, in general small amounts, of energy from the environment into usable electrical energy for the loT device. This energy is typically generated from natural or existing energy sources like carrier waves, light, heat, and/or vibrations.

As used herein, a **carrier wave** is a high-frequency electromagnetic wave that is for example modulated to carry information, typically in communications systems. Carrier waves are typically in the radio frequency (RF) spectrum, ranging from kilohertz (kHz) to gigahertz (GHz). Higher frequencies, such as those used in microwave communications, are especially suited for energy harvesting due to their ability to deliver more power in a smaller wavelength. IoT-devices can capture the RF energy from carrier waves. When the wave reaches the loT-device, the electromagnetic energy is converted into a small voltage, which can then be processed for various applications. Carrier waves in the field of energy harvesting act as a convenient medium for transmitting electromagnetic energy that can be captured and converted into useful electrical power, particularly in low-power, remote, or wireless applications.

The present disclosure relates to an A-loT device, a base station, and an intermediate node connected to a base station, methods of communication between the A-loT device and the base station and the A-loT device and the intermediate node.

Different and exemplary implementations of the improved transmission procedure are explained in the following. For the explanation of the different implementation, some exemplary and simplifying assumptions are made.

According to one exemplary assumption, the message is a paging signal. For example, the loT device operates a communication process, according to which the loT device should send a response to the paging signal in the communication process. The solution and the implementations are primarily and exemplarily described on the basis of such a paging signal, according to which the loT device and the node communicate. The corresponding response to the paging signal in the communication process can be skipped, modified, delayed or the like to instead harvest energy. Further, the communication process can be skipped and/or subsequent communication processes can be skipped.

However, this is only an example of a scenario to which the solutions can be applied. The solution can also be applied to other scenarios than paging signals for communication process, e.g. in scenarios in which messages are exchanged for communication processes. Other scenarios are for example the exchange of trigger signals for data transmission, messages such as broadcasts or unicasts, or the exchange of data.

However, for the sake of simplicity, it is assumed in the following that the message is a paging signal, in particular for a communication process.

### Solution - Determine to harvest energy

According to a first solution, the loT device determines to harvest energy for a communication process on the basis of an indication of the loT device power shortage. For example, the indication may indicate a power shortage of the loT device.

It is provided an (ambient) Internet of Things, A-loT, device, comprising a transceiver which, in operation, receives (is configured to receive) from a node a message (e.g. a trigger signal, paging signal, data signal, or an acknowledgement signal) for a communication process (e.g. a RACH procedure), and a circuitry, which in operation, determines (is configured to determine) based on an indication of the loT device power shortage to harvest energy for the communication process (e.g. sending a response to the node in the communication process to the received message).

It is further provided a node, comprising a transceiver which, in operation, transmits a message to an Internet of Thing, loT, device and receives from the loT device an indication of a power shortage.

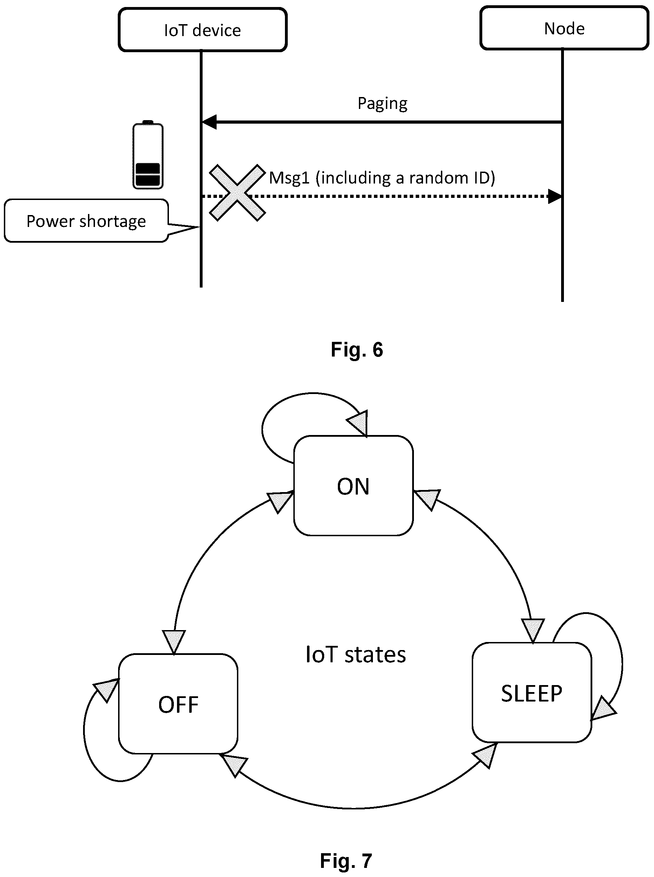

In the situation discussed in above **Fig. 6****,** the circuitry, in operation, determines a status of energy of the loT device, for example, as indicated by the battery symbol with two loading bars. The status of energy is used for determining an indication of the loT device power shortage. For example, the loT device measures the energy status of the loT device, e.g. by measuring a charging state of a battery for storing energy. The value of the charging state may be compared with an indicated and/or configured threshold value.

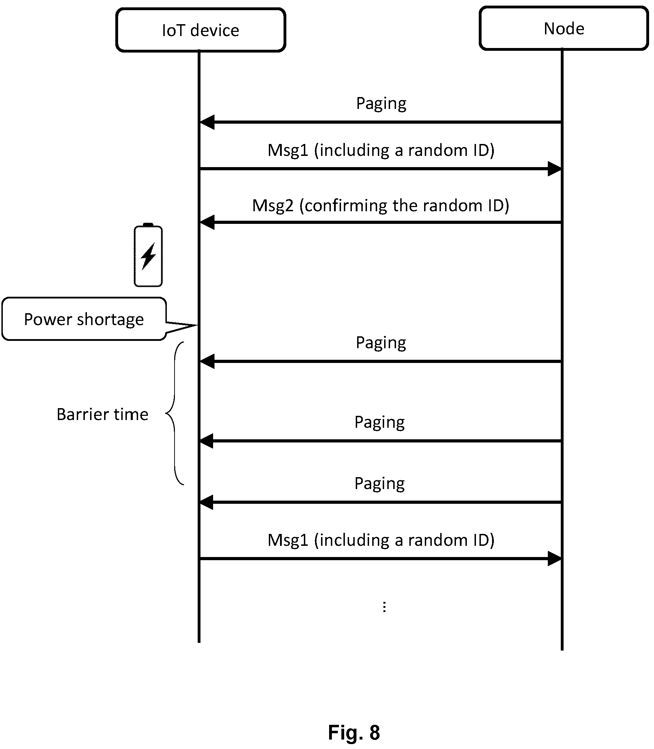

Additionally or alternatively, an energy status of the loT device may be derived based on other parameters, e.g. a counter counting previously failed communication process as indicated by the empty battery symbol in Fig. 8. The value of the counter may be compared with an indicated and/or configured counter threshold. In other words, the circuitry, in operation, counts a number of consecutive failed communication processes, the number for determining the indication of the loT device power shortage. For example, the number may be any number greater than or equal to 1. These measures and determinations facilitate to provide the circuitry of the loT device with an indication of the loT device power shortage. For example, the indication may indicate a power shortage of the loT device.

Further, as shown in **Fig. 6****,** a condition is indicated when the loT device determines an energy status of the loT device. For example, the loT device determines the energy status based on a condition such as in response to receiving a paging signal, which is an example of a message for a communication process. Additionally or alternatively, the loT device may determine an energy status of the loT device based on a time condition such as upon receiving the message. Additionally or additionally, the loT device may determine an energy status of the loT device in response to a change of state, e.g. when the loT device enters a high-power mode, e.g. an ON state as described in detail below with reference to Fig. 7.

Based on the determination of the energy status report of the loT device, the loT device can determine a power shortage. For example, as shown in the example of Fig. 6, the loT device can predict that the power shortage occurs during the communication process, in particular during the communication process if it sends a response related to the communication process. Hence, the loT device skips the communication process by not sending Msg1 in Fig. 6. Alternatively, the energy status of the loT device may indicate the power shortage as for example shown in Fig. 8 based on past events, e.g. a failed communication process.

Based on the indication of the loT device power shortage, the loT device starts to harvest energy. The loT device may start harvesting energy in response to determining the loT device power shortage or may plan to start harvesting energy upon taking further actions, e.g. informing the node or changing an operation state.

Various examples with harvesting energy are shown in **Figs. 6 to 15****.** The following implementations discuss aspects of the schemes.

### 1^{st} Implementation - Harvesting energy

**Fig. 6** shows an example to harvest energy. In particular, the loT device skips, based on the determined indication of the loT device power shortage, sending at least one response related to the communication process, i.e. after receiving the paging signal. Skipping generally means to pass over or omit a step of the communication process. For example, skipping includes bypassing a response during the communication process. In other words, the loT device can skip a communication step related to the communication process and instead harvest energy when the loT device does not have sufficient energy.

More specifically, as shown in Fig. 6, which is a similar example to Fig. 5, the determined energy status of the loT device indicates a limited amount of energy that is not sufficient to complete the communication procedure, here, for example, a RACH procedure. When the loT device receives the paging signal, the loT device refrains from sending a response (e.g., Msg1). Instead, the device harvests energy, such as from a CW signal provided by the node. The loT device could send a response to a later paging signal when it has enough energy. This solution allows the loT device to refrain from starting the communication process that could not be completed. Instead, it could harvest power.

**Fig. 7** shows a further example to harvest energy. In more detail, the loT device may have several operation states, in the following referred to as states such as ON, OFF, and SLEEP. The loT device may communicate in ON state, receive some signals in SLEEP state, and does no support transmission and reception in OFF state. It may harvest energy in OFF and/or SLEEP states. The rate of energy consumption of the device might be different for states, e.g., with higher, medium, and low for the state ON, SLEEP, and OFF, respectively. The state ON may be referred to as a high-power mode and the states SLEEP and OFF may be referred to as low-power modes. Further operation states may be defined by ready to send and/or receive data, maintaining volatile memory content, switched off, a capability to harvest energy, low battery power, stand by or sleep state.

When the device receives a message such as a paging or triggering signal to initiate a communication process such as a RACH procedure or data transmission/reception, the circuitry determines based on an indication of the loT device power shortage that it does not have sufficient energy. In other words, the circuitry, in operation, determines, based on the indication of the loT device power shortage, to operate the loT device in a low-power mode to harvest energy. The loT device can autonomously transit to another state (e.g., the low-power modes such as SLEEP state and OFF state) to harvest energy. Alternatively, the loT device can, based on the indication of the loT device power shortage, remain in the low-power mode. The device may change its states later when it obtains enough energy. For instance, the loT device transit to ON or SLEEP when it has obtained sufficient energy. The determination to change a state may be determined based on the determined status of energy of the loT device and a threshold value for the SLEEP state and/or a threshold value for the OFF state, the threshold value indicating an amount of energy for state transition. The threshold value could be hard-coded, e.g. in a memory of the loT device, defined, preconfigured, or indicated, e.g. by the triggering signal of the node. Alternatively, the loT device may start a timer to change a state. In other words, the circuitry operates the loT device for a period of time in the low-power mode. Preferably, the low-power mode is configured and/or indicated. For example, the timer may require to maintain volatile memory content, e.g. in the ON and SLEEP state.

Further, as indicated in Fig. 7, the circuitry may determine that the loT device transits to or remains in a high-power mode for sending at least one response related to the communication process to the node based on an indication that sufficient energy has been harvested. The determination to transit or remain in the high-power state such as the ON sate, may be determined based on the determined status of energy of the loT device and a threshold value for the ON state, the threshold value indicating an amount of energy for state transition.

**Fig. 8** shows a further example to harvest energy. In particular, similar to the solution shown in Fig. 6, the loT device does not send responses to a message of a communication process. In the particular example in Fig. 8, a barrier timer is stated at the loT device, in particular in response to a determined indication of the loT device power shortage. The indication of the loT device power shortage can be based on the determination that the loT device failed to complete a previous communication process, e.g., which failed due to the power shortage. In response to the indication of the loT device power shortage, the loT device starts the timer as shown in Fig. 8. During the timer is active, the loT device shall not initiate another communication process or respond to a communication process until the timer reaches a predefined or indicated time. Alternatively, as discussed with Fig. 6, the loT device can skip a predefined or indicated number of processes in response to determine an indication of the loT device power shortage, such as when it fails to complete a previous communication process. The number of processes can be any natural number greater than or equal to 1.

The example shown in Fig. 8 may be in particular combined with the example shown in Fig. 7, namely by entering a low-power mode such as the SLEEP state and OFF state during which the loT does not support transmitting signals. In particular, during a SLEEP sate, a timer can be run before changing at the end of the timer to the ON sate.

The example in Fig. 8 facilitates that the loT device may not initiate a communication process if it had failed completing an earlier communication process or a plurality of, for example successive, communication processes. In the example shown in Fig. 8, the device starts a communication process such as a RACH procedure by responding to a Msg 1 to the node. However, it cannot complete the process due to a power shortage. The device starts the timer and does not send responses to new paging signals during the barrier time. This facilitates to limit performing unsuccessful communication processes by an loT device, which in turn could decrease the performance of the system.

Various examples to harvest energy have been discussed in the 1^{st} implementation. In particular, the loT device may skip sending responses to a communication process, change a state of the device for limiting functions for responding, and/or may limit functions of the loT device by starting a barrier timer during which energy can be harvested.

### 2^{nd} Implementation-Indication to node

In addition to the examples for how to harvest energy discussed in the 1^{st} implementation, the loT device may additionally or alternatively notify the node of the loT device power shortage. In particular, the transceiver can send, in operation, to the node, based on the indication of the loT device power shortage, a notification for an indication of the loT device power shortage.

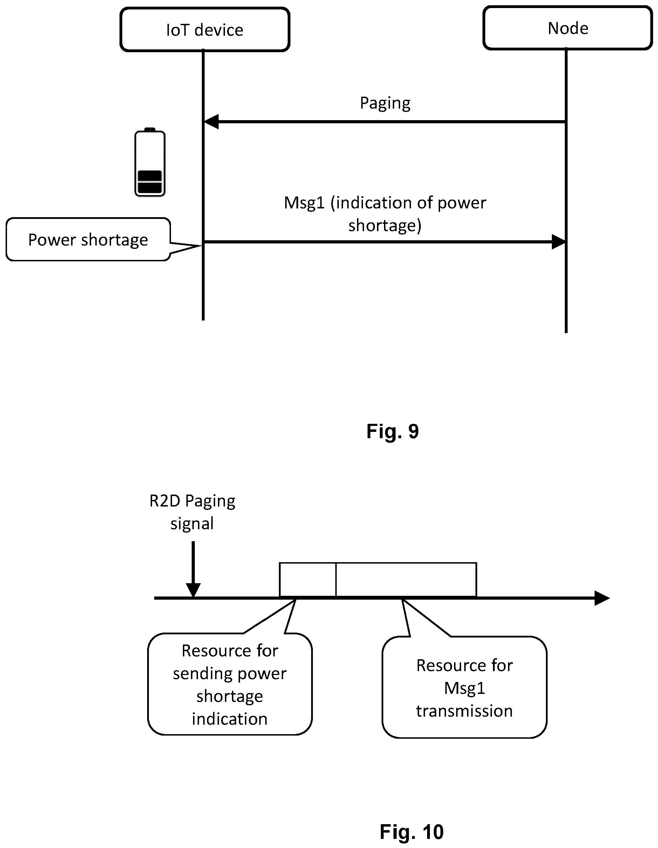

A first example of the 2^{nd} implementation is shown **Fig. 9****,** which is similar to the situation in Fig. 6. Instead of skipping the message, as discussed in Fig. 6, the loT device can send an indication that it cannot initiate or complete the communication process.

The loT device identifies the power shortage for performing a communication process (e.g., RACH procedure or data transmission/reception). As discussed above, the loT device can determine in response or upon receiving a message an energy status of the loT device, which indicates the loT device power shortage. When the loT device detects or receives a message such as a paging signal and determines the indication of the loT device power shortage, the loT device can send a response, e.g. a notification titled as Msg1 in Fig. 9, which comprises an indication of the loT device power shortage in response to receiving the message. For example, the notification comprise an indication of skipping sending at least one response related to the communication process. In other words, the loT device can send a response to the node indicating that it cannot initiate or complete the communication process.

Additionally or alternatively, the notification can comprise a request for providing by the node a radio frequency (RF) signal, the RF signal for providing energy to be harvested by the loT device. In other words, the response could be in a form of power shortage indication or request for providing the CW signal for energy harvesting. This example facilitates that the node could provide an RF signal for the loT device for energy harvesting. Further, it facilitates to inform the node of the power shortage. Thus, the node may avoid triggering the device soon in order to give sufficient time to the loT device to harvest energy.

A second example of the 2^{nd} implementation is a modification of the first example. The indication of the loT device power shortage can be notified by a dedicated ID or signal. In other words, the notification comprises a specific identification (ID), the specific ID indicating the loT device power shortage. For instance, for RACH procedure, the loT device is supposed to select a random ID (or preamble) to send as a part of Msg1 response as shown in Fig. 8. A specific ID (or preamble) could be dedicated for notifying an indication of the loT device power shortage. Any loT device that has a power shortage can use this specific ID (or preamble) for a message, e.g. here the Msg1 or any other signaling. The specific ID can be configured or indicated.

A third example of the 2^{nd} implementation is shown **Fig. 10****.** According to this example, dedicated resources can be allocated, defined, or indicated for carrying the notification of the loT device power shortage. In other words, the loT device uses a specific resource of the notification for sending the indication for of the loT device power shortage of the loT device. A dedicated resource, for example in time as shown in Fig. 10 and/or in a frequency domain, could be assigned for the loT devices to carry the power shortage indication and/or a request for the CW signal for energy harvesting. In the example, shown in Fig. 10, the node sends a message such as a paging signal to initiate the communication process such as the RACH procedure. A part of time domain resource is dedicated to carry an identification notifying the node of the loT device power shortage. Any loT device that determines the loT device power shortage, i.e. does not have sufficient energy for completing the communication process, could use this resource to send an indication to notify the node of the loT device power shortage. Other loT devices can initiate the communication process such as a RACH procedure after the dedicated time as shown in Fig. 10. The specific resource can be configured or indicated.

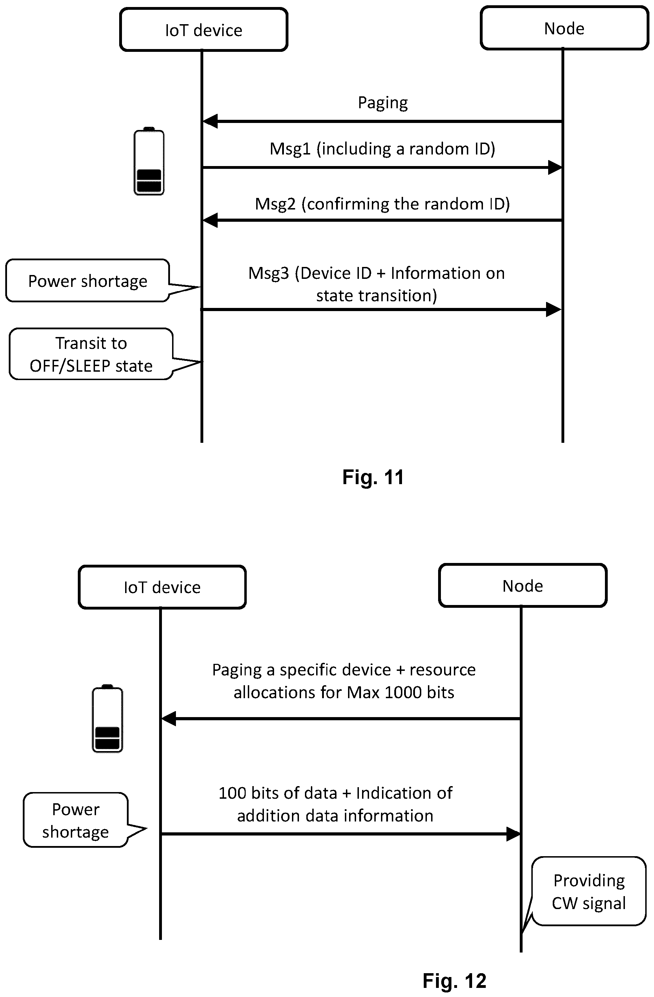

A fourth example of the 2^{nd} implementation is shown **Fig. 11****,** which is similar to the situation in Fig. 5. For example, the UE identifies that the loT device has a power shortage for performing the communication process (e.g., RACH procedure or data transmission/reception) during the communication process. The loT partly executes the communication process and notifies as a part of the communication process, here as a part of Msg3, the node that it will harvest energy, e.g. by the transition to an OFF or SLEEP operation state, instead of sending data or continuing the communication process. In other words, the loT device sends a message in the communication process comprising an indication of an operation state transition to a low-power mode as indicated in Fig. 7. As discussed, changing to OFF state or SLEEP state can indicate that the loT device will not sending data or continuing the communication process.

The loT device may additionally indicate on a time duration for harvesting energy. For example, the notification can comprise an indication of a time period the loT device remains in a low-power mode. In other words, the notification can comprise information how long the loT device remains in the OFF or SLEEP before become available again for the communication process. The node may send a message such as a paging signal or trigger signal to the loT device after the time period indicated in the notification has lapsed.

The time period, in particular a minimum time period, that the loT device should remain in OFF state or the SLEEP state to harvest energy could be configured and/or indicated, e.g., by the node. The node may thus send a message to the loT device upon passing the minimum time period.

A fifth example of the 2^{nd} implementation is shown **Fig. 12****,** which discusses an implicit notification of the node of the loT device power shortage. In this example, a node sends a message to the loT device. For example, the message is a trigger for a specific device to deliver its data by scheduling a D2R transmission. In the example, the scheduled D2R transmission could be used to carry up to a specific data size, e.g. 1000 bits of information. The loT device determines based on an indication of the loT device power shortage that it does not have enough energy to transmit all its data. Hence, it may transmit a portion of data (e.g., 100 bits) and sends an indication that it has more data for transmission. In other words, the transceiver, in operation, sends, based on the indication of the loT device power shortage, the response related to the communication process, here the portion of data, wherein the response includes a notification comprising an indication of the loT device power shortage. For example, the notification comprises an indication of a subsequent data transmission, which can indicate that the loT device has more data for transmission.

The notification, in particular a notification of subsequent data transmission in case a specific data size is scheduled for a D2R data transmission can be considered as an implicit indication for power shortage, as D2R transmission could accommodate more bits of information. The node may identify based on the notification the loT device power shortage. The loT device can harvest energy to transmit the remaining data. The node can provide an RF signal for the loT device to harvest energy. Alternatively or additionally, the loT device can use other energy sources to harvest energy as discussed above. The node can request with a further paging signal the device to send the additional data information. This example facilitates that there is no need to dedicate a bit for sending an indication of lack of energy.

### 3^{rd} Implementation-Predict power consumption

In addition to the examples for how to harvest energy discussed in the first implementation and the notification of the node of the loT device power shortage in the second implementation, the loT device can be further improved, in particular by predicting a power shortage of the loT device based on available information.

For example, based on the determined energy status, such as indicated by the battery icon with two level bars in Fig. 6, the loT device can predict a power shortage of the loT device at a certain time in the future, as indicated by the speech bubble in Fig. 6. Thus, the loT device can use the energy status to estimate whether it is able to perform the communication process or not. Based on this estimation, the loT device may determine to harvest energy.

To further improve the estimation, the message received by the transceiver can comprise an indication of required energy for the communication process and the circuitry, in operation determines the indication of the loT device power shortage based on the indication of required energy and the status of energy of the loT device. Required energy refers to the amount of energy needed to accomplish a specific task or process, e.g. here the communication process.

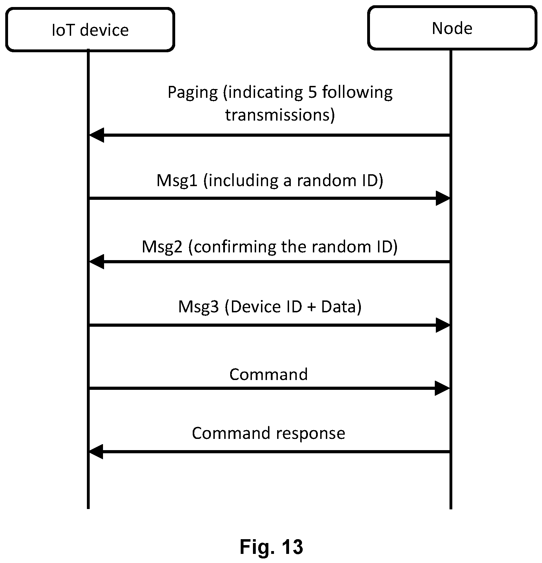

For example, as shown in **Fig. 13****,** a node may indicate in a message for a communication process a required energy for accomplishing the communication process. The required energy could be indicated as shown in Fig. 13 as a number of transactions, which can be called an access procedure, or transmissions and/or receptions required for the process. In the example of Fig. 13, the node intends to initiate the communication with an loT device to receive and send data information. In this example, the communication process comprises or consists of a paging signal followed by 5 transmissions, e.g. here three transmissions of the loT device and two receptions of the loT device. The node indicates the number of required transmissions to the node as a part of the first message of the communication process, e.g. the paging signal.

The loT device determines if it has sufficient energy for the following communications in the communication process, in particular based on the indication of required energy comprised in the paging signal and the status of energy of the loT device, which may be determined as discussed above. The loT device may output the result of the determination.

If the loT device determines that it has sufficient energy, it can send a message titled Msg1 in Fig. 13 and continue the communication process. The response can implicitly communicate the node that the loT device has sufficient energy.

Otherwise, the loT device can determine to harvest energy. For example, the loT device could refrain from sending a response to the node, as for example discussed in the 1^{st} implementation, and instead start to harvest energy. The node can determine, e.g. after a predetermined time for waiting to a response, based on the lack of a response from the loT device that the loT device has a power shortage. Additionally or alternatively, the loT device can notify, as discussed in the 2^{nd} implementation, the node explicitly of the loT device power shortage. This example facilitates that the loT device can determine if it has sufficient energy for specific communication process.

By way of example, the node communicates in Fig. 13 the required energy by a number of transmissions and/or receptions. Additionally or alternatively, the indication of required energy comprises at least one of
- a percentage of remaining energy at the loT device;
- an energy level;
- a number of transactions necessary for the communication process;
- an amount of time necessary for the communication process; and
- an amount of bit information to be carried by the communication process; and
- a type of communication process.

The indication of a percentage of remaining energy can for example indicate the percentage of remaining energy the loT device stores before beginning the communication process or the percentage of remaining energy the loT device stores after completing the communication process. The indication of percentage can be related to a threshold for switching in a low-power mode, as for example discussed with reference to Fig. 7.

Similarly, the energy level may indicate an energy level before starting or after completing the communication process. The energy level can be a threshold for switching to a low-power mode, as for example discussed with reference to Fig. 7.

The number of transactions refers to an exchange of a number of interactions between two or more parties. It involves the back-and-forth communication, where messages, signals, or data are sent and received, for example with the purpose of completing a specific goal or achieving mutual understanding.

The amount of time can be measured from a first reception of a message, e.g. the paging signal, to a final response from the loT device or the node, e.g. an ACK/NACK in Fig. 13, to be received by the loT device.

The amount of bit information may be, for example, a specific data size scheduled for a D2R data transmission as discussed in with Fig. 12.

The communication process comprises at least one of:
- a Random Access Channel, RACH, procedure;
- a data transmission process;
- a data reception process; and
- an inventory command.

The type of the communication can be indicated in the first message of the communication process. In particular, the inventory command refers to a set of instructions or procedures used to manage and monitor network resources and equipment, e.g. a distance measurement of the loT device from the node.

### Further examples

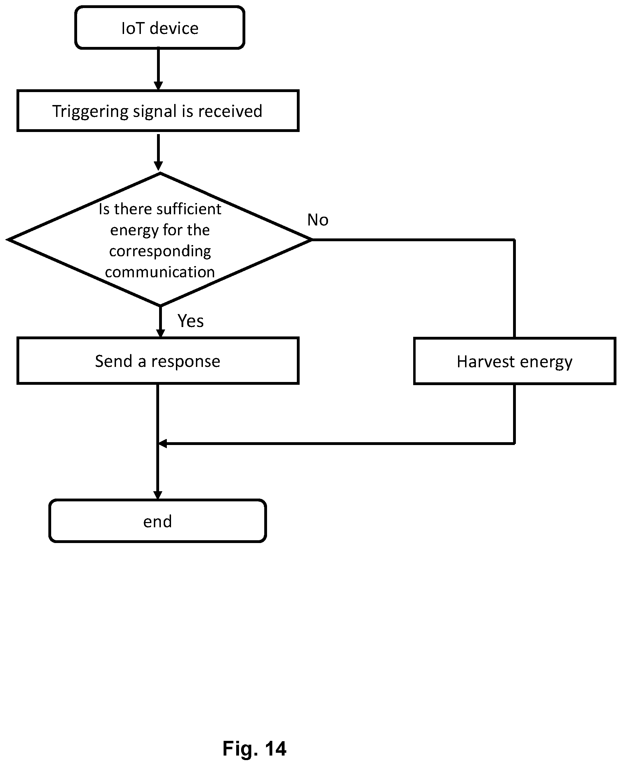

The above solution and the implementations are summarized in the flow chart for the loT device in **Fig. 14****.** In particular, the loT device determines whether to send a response to a message or to harvest energy.

In particular, in a first step, the loT device receives a message such as a trigger signal. Then, in a second step, the loT device determines based on an indication of an loT device a power shortage whether or not to harvest energy. The determination in second step may consider further measures, e.g. a required energy for the communication process received previously.

In case of determining that the loT device has not a power shortage, the loT device may decide not to harvest energy, for example remain in the ON state, which is a high-power mode. Additionally, the loT device may decide to send a response related to the message, if such a response is required.

In case of determining that the loT device has a power shortage, the loT device determines to harvest energy as discussed above. Even not shown in Fig. 14, the determination may comprise a decision to partly execute the communication process as shown in Fig. 12. After having partly executed the communication process, the loT device harvests energy.

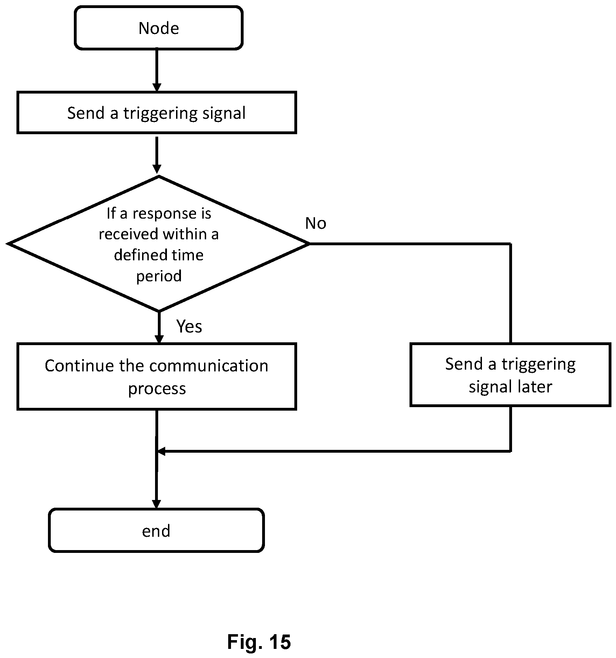

As similar flow chart for the node is shown in **Fig. 15****.** In particular, the node can decide whether to continue the communication process with the loT device or postpone it.

In particular, in a first step the node sends a message such as a trigger signal to the loT device. Then, the loT device determines based on an indication of the loT device power shortage that the loT device harvests energy for the communication process. For example, not receiving a response in a defined time period can indicate a power shortage of the loT device. Additionally or alternatively, a number of failed communication process can indicate a power shortage of the loT device. Additionally or alternatively, a response of the loT device can comprise an indication of a power shortage of the loT device.

In case of determining that the loT device has not a power shortage, e.g. by receiving a response from the loT device, the node can continue with the communication process.

In case of determining that the loT device has or may have a power shortage, the node may delay a further message and/or provide an RF signal, the the RF signal for providing energy to be harvested by the loT device.

### Further implementations

As mentioned above, there may be numerous loT devices communicating with a node. The loT devices may not have the legacy RRC states, ARQ, and HARQ. Therefore, a contention-based channel may be used to initiate communication. However, this could cause excessive attempts for channel access, which may result in the loT device power shortage. Further, the loT device power shortage can lead to unsuccessful communication processes. Further, in view of an unsuccessful communication processes the node may not know the reason for the failure. Some loT devices have a limited energy capacity. The energy could be obtained from the environment (vibration, light, heat) or a carrier wave, e.g., provided by the gNB/intermediate node. It may implement, e.g. repetitions to increase robustness.

To facilitate the communication considering the mentioned limitations, the loT device harvests energy for a communication process based on an indication of the loT device power shortage.

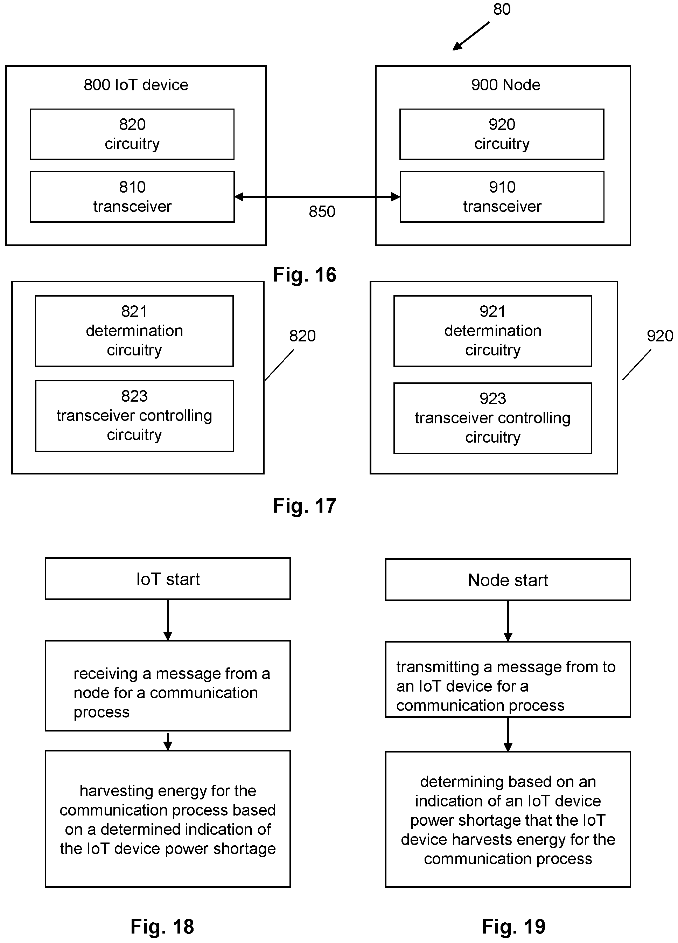

**Fig. 16** illustrates a general, simplified and exemplary block diagram of an loT device 800 and a node (base station or intermediate node connected to a base station) 900 forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (IoT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 may comprise a transceiver 810 and a (processing) circuitry 820, and the base station 900 may comprise a transceiver 910 and a (processing) circuitry 920. The transceiver 810 or 910 in turn may comprise and/or function as a receiver and/or a transmitter. In this disclosure, in other words, the term "transceiver" is used for hardware and/or software components that allow the loT device 800, and the base station 900 to transmit and/or receive radio signals over the wireless channel 150, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 receives a message such as a paging or trigger signal. The circuitry 820 of the loT device 800 determines based on an indication of the loT device power shortage to harvest energy for the communication process. For example, the indication may indicate a power shortage of the loT device 800.

In some embodiments, the circuitry 920 of the base station 900 determines based on an indication of the loT device power shortage that the loT device harvests energy for the communication process.

The circuitries may be configured by software to perform the functions as described in any of the above embodiments. As shown in **Fig. 17** the circuitry 820 of the loT device may further comprise a functional module referred to as determination circuitry 821 for performing the determination. A transceiver controlling circuitry 823 is a functional module that controls the transceiver 810 (in Fig. 16) to receive the message. Moreover, as shown in **Fig. 17****,** the circuitry 920 of the base station or an intermediate node may further comprise a functional module referred to as determination circuitry 921 for performing any determinations. A transceiver controlling circuitry 923 is a functional module that controls the transceiver 910 (in Fig. 16) to transmit the message.

A corresponding exemplary method for an loT device comprises the following steps performed by an loT device:
receiving a message from a node for a communication process, and
harvesting energy for the communication process based on a determined indication of the loT device power shortage

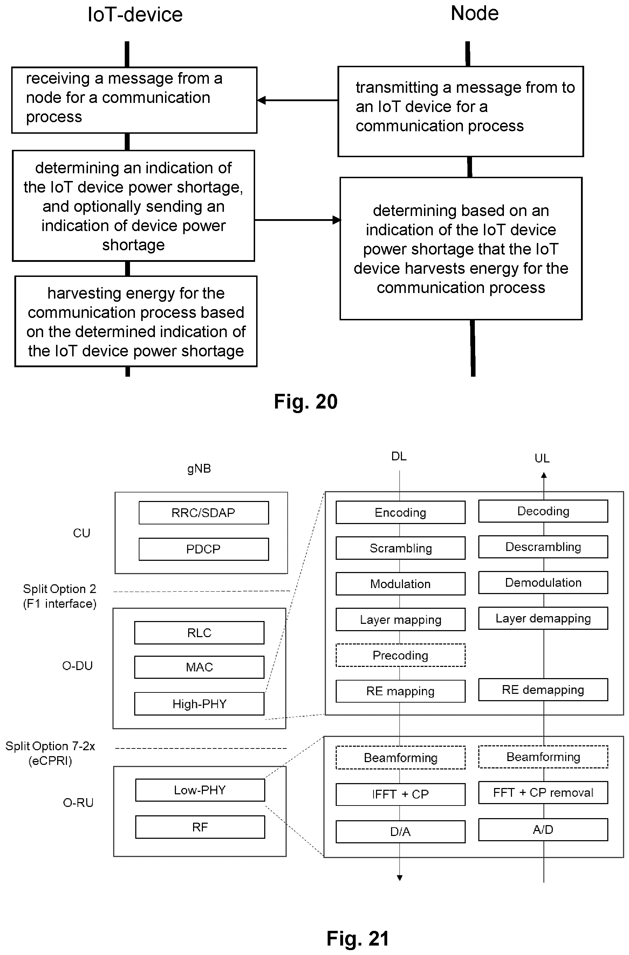

A corresponding sequence diagram for an exemplary loT device behavior in line with the above-discussed loT device and loT device method is in **Fig. 20****.**

A corresponding exemplary method for node comprises the following steps performed by a node:
transmitting a message from to an loT device for a communication process, and
determining based on an indication of the loT device power shortage that the loT device harvests energy for the communication process.

**Fig. 20** is a signalling diagram of an exemplary and simplified implementation of the improved transmission procedure, illustrating the exchange of messages between the different participating entities (here the loT device and the node) and the steps performed at these entities. The loT behavior and node behavior follow the above described loT device and node and the respective methods. In particular, after the loT device receives the message from the node, the loT determines an indication of the loT device power shortage. In response to the determination, the loT device may send an indication of the loT device power shortage to the node. Then, the loT device starts to harvest energy.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT device may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above-mentioned embodiments and examples.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0). RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 22** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI. Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise a receiver and/or a transmitter, and/or function as a receiver and/or a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, it is provided an Internet of Thing, loT, device, comprising: a transceiver, which in operation, receives, from a node, a message for a communication process, and a circuitry, which in operation, determines based on an indication of the loT device power shortage to harvest energy for the communication process.

According to a second aspect, wherein the circuitry of the loT device according to the first aspect, in operation, further skips, based on the determined indication of the loT device power shortage, sending at least one response related to the communication process.

According to a third aspect, wherein the circuitry of the loT device according to any one of the above aspects, in operation, determines a status of energy of the loT device, the status of energy for determining the indication of the loT device power shortage.

According to a fourth aspect wherein the circuitry of the loT device according to any one of the above aspects, in operation, counts a number of failed communication processes, the number for determining the indication of the loT device power shortage.

According to a fifth aspect wherein the circuitry of the loT device according to any one of the above aspects, in operation, determines, based on the indication of the loT device power shortage, to operate the loT device in a low-power mode to harvest energy.

According to a sixth aspect wherein the circuitry of the loT device according to the fifth aspect, in operation, transits to or remains in the low-power mode.

According to a seventh aspect wherein the circuitry of the loT device according to any of the fifth to sixth aspect, in operation, operates the loT device for a period of time in the low-power mode, optionally wherein the low-power mode is configured and/or indicated.

According to an eighth aspect wherein the circuitry of the loT device according to any of the fifth to seventh aspect, in operation, transits to or remains in a high-power mode for sending at least one response related to the communication process to the node based on an indication that sufficient energy has been harvested.

According to a ninth aspect wherein the transceiver of the loT device according to any one of the above aspects, in operation, sends to the node, based on the indication of the loT device power shortage, a notification for an indication of the loT device power shortage.

According to a tenth aspect the notification comprises at least one of: an indication of transition of the loT device to a low-power mode; an indication of skipping sending at least one response related to the communication process; an indication of a time period the loT device remains in a low-power mode; a request for providing by the node a radio frequency, RF, signal, the RF signal for providing energy to be harvested by the loT device; and a specific identification, ID, the specific ID indicating the loT device power shortage.

According to an eleventh aspect according to any one of the ninth to tenth aspect, the loT device uses a specific resource of the notification for sending the indication of the loT device power shortage.

According to a twelfth aspect, according to any one of the first to eleventh aspect, the transceiver, in operation, sends, based on the indication of the loT device power shortage, the response related to the communication process, wherein the response includes a notification comprising an indication of the loT device power shortage,

According to a thirteenth aspect, according to the twelfth aspect, wherein the notification comprises an indication of a subsequent data transmission.

According to a fourteenth aspect, according to any one of the first to thirteenth aspect, the message received by the transceiver comprises an indication of required energy for the communication process and the circuitry, in operation determines the indication of the loT device power shortage based on the indication of required energy and the status of energy of the loT device.

According to a fifteenth aspect, according to the fourteenth aspect, the indication of required energy comprises at least one of: a percentage of remaining energy at the loT device; an energy level; a number of transactions necessary for the communication process; a number of transmissions and/or receptions necessary for the communication process; an amount of time necessary for the communication process; an amount of bit information to be carried by the communication process; and a type of communication process.

According to a sixteenth aspect, according to any one of the first to fifteenth aspect, the communication process comprises at least one of: a Random Access Channel, RACH, process; a data transmission process; a data reception process; and an inventory command.

A seventeenth aspect relates to a method comprising the following steps performed by an Internet of Things, loT, device:
receiving, from a node, a message for a communication process, and
determining, based on an indication of the loT device power shortage, to harvest energy for the communication process.

The method of the seventeenth aspect or any embodiment/implementation thereof may be implemented in the loT device according to the first to sixteenth aspect or any embodiment/implementation thereof.

An eighteenth aspect relates to a node comprising: a transceiver which, in operation, sends, to an Internet of Things, loT, device, a message for a communication process, and a circuitry, which in operation, determines based on an indication of the loT device power shortage that the loT device harvests energy for the communication process.

The node of the eighteenth aspect or any embodiment/implementation thereof may be implemented with the loT device according to the first to sixteenth aspect or any embodiment/implementation thereof.

A nineteenth aspect relates to the node according to the eighteenth aspect, wherein the message comprises an indication of required energy for the communication process.

A twentieth aspect relates to a method comprising the following steps performed by a node: sending, to an Internet of Things, IoT, device, a message for a communication process, and determining, based on an indication of the loT device power shortage, that the loT device harvests energy for the communication process.

The method of the twentieth aspect or any embodiment/implementation thereof may be implemented in the loT device according to the first to sixteenth aspect or any embodiment/implementation thereof.

According to a further aspect it is provided a communication system comprising the loT device according to first to sixteenth aspect or any embodiment/implementation thereof a node according to the eighteenth to nineteenth aspect or any embodiment/implementation thereof.

Moreover, in an aspect, a computer program is provided including code instructions stored on a non-transitory medium, which when executed on one or more processor, causes the one or more processors to execute a method according to any of the above mentioned aspects and examples.

## Claims

1. An Internet of Thing, loT, device, comprising:
a transceiver, which in operation, receives, from a node, a message for a communication process, and
a circuitry, which in operation, determines based on an indication of the loT device power shortage to harvest energy for the communication process.

2. The loT device according to claim 1, wherein the circuitry, in operation, further skips, based on the determined indication of the loT device power shortage, sending at least one response related to the communication process.

3. The loT device according to any one of the preceding claims, wherein the circuitry, in operation, determines a status of energy of the loT device, the status of energy for determining the indication of the loT device power shortage.

4. The loT device according to any one of the preceding claims, wherein the circuitry, in operation, counts a number of failed communication processes, the number for determining the indication of the loT device power shortage.

5. The loT device according to any one of the preceding claims, wherein the circuitry, in operation, determines, based on the indication of the loT device power shortage, to operate the loT device in a low-power mode to harvest energy,
optionally , wherein the circuitry, in operation, transits to or remains in the low-power mode.

6. The loT device according to claim 5, wherein the circuitry, in operation, operates the loT device for a period of time in the low-power mode, optionally wherein the low-power mode is configured and/or indicated.

7. The loT device according to any one of claims 5 to 6, wherein the circuitry, in operation, transits to or remains in a high-power mode for sending at least one response related to the communication process to the node based on an indication that sufficient energy has been harvested.

8. The loT device according to any one of the preceding claims, wherein the transceiver, in operation, sends to the node, based on the indication of the loT device power shortage, a notification for an indication of the loT device power shortage,
optionally, wherein the notification comprises at least one of:
- an indication of transition of the loT device to a low-power mode;
- an indication of skipping sending at least one response related to the communication process;
- an indication of a time period the loT device remains in a low-power mode;
- a request for providing by the node a radio frequency, RF, signal, the RF signal for providing energy to be harvested by the loT device; and
- a specific identification, ID, the specific ID indicating the loT device power shortage.

9. The loT device according to claim 8, wherein the loT device uses a specific resource of the notification for sending the indication of the loT device power shortage.

10. The loT device according to any one of the claims 1 to 7, wherein the transceiver, in operation, sends, based on the indication of the loT device power shortage, the response related to the communication process, wherein the response includes a notification comprising an indication of the loT device power shortage,

11. The loT device according to claim 10, wherein the notification comprises an indication of a subsequent data transmission.

12. The loT device according to any of the preceding claims, wherein the message received by the transceiver comprises an indication of required energy for the communication process and the circuitry, in operation determines the indication of the loT device power shortage based on the indication of required energy and the status of energy of the loT device,
optionally, wherein the indication of required energy comprises at least one of:
- a percentage of remaining energy at the loT device;
- an energy level;
- a number of transactions necessary for the communication process;
- a number of transmissions and/or receptions necessary for the communication process;
- an amount of time necessary for the communication process;
- an amount of bit information to be carried by the communication process; and
- a type of communication process.

13. The loT device according to any of the preceding claims, wherein the communication process comprises at least one of:
- a Random Access Channel, RACH, process;
- a data transmission process;
- a data reception process; and
- an inventory command.

14. A method comprising the following steps performed by an Internet of Things, loT, device:
receiving, from a node, a message for a communication process, and
determining based on an indication of the loT device power shortage to harvest energy for the communication process.

15. A node comprising:
a transceiver which, in operation, sends, to an Internet of Things, loT, device, a message for a communication process, and
a circuitry, which in operation, determines based on an indication of the loT device power shortage that the loT device harvests energy for the communication process.
